# EUROPEAN PATENT SPECIFICATION

(11) **EP 4 361 695 B1**
(45) Date of publication and mention of the grant of the patent: **04.02.2026**
(21) Application number: 23181399.9
(22) Date of filing: 26.06.2023
(51) Int. Cl.: G02B 6/48

(54) **HANGER AND A HANGER KIT TO AERIALLY MOUNT A FIBER OPTIC ENCLOSURE**
AUFHÄNGER UND HÄNGERKIT ZUR LUFTMONTAGE EINES GLASFASERGEHÄUSES
DISPOSITIF DE SUSPENSION ET KIT DE SUSPENSION POUR MONTER DE MANIÈRE AÉRIENNE UNE ENCEINTE DE FIBRE OPTIQUE

(30) Priority: 26.10.2022 IN 202211061031
(43) Date of publication of application: 01.05.2024
(73) Proprietor: Sterlite Technologies Limited, Gurugram, Haryana 122102 (IN)
(72) Inventor: El Allam, Sadek, 122102 Gurugram, Haryana (IN); Zuccarello, Sebastiano, 122102 Gurugram, Haryana (IN)
(74) Representative: Petraz, Gilberto Luigi

(56) References cited:
- DE-U1- 7 904 314
- US-A- 3 415 474
- US-A- 3 701 835
- US-A1- 2013 236 141
- US-B2- 9 052 038

## Description

### TECHNICAL FIELD

Embodiments of the present disclosure relates to the field of mounting optical fiber apparatus, and more particularly to a hanger and a hanger kit to aerially mount a fiber optic enclosure.

This application claims the benefit of Indian Application No. 202211061031 titled "HANGER AND A HANGER KIT TO AERIALLY MOUNT A FIBER OPTIC ENCLOSURE" filed by the applicant on October 26, 2022.

### BACKGROUND ART

Aerial routing configurations are commonly used to distribute fiber optic cables to various locations within a fiber optic network. In a typical aerial routing configuration, fiber optic cables are lashed to metal strands (e.g., metal wires or cables) that are routed aerially from power pole to power pole. At various locations throughout the fiber optic network, it is desirable to access optical fibers of the fiber optic cables (e.g., for splicing to drop cables). At typical access locations, cable jackets of the fiber optic cables are cut and/or removed to provide access to the optical fibers. The access locations are typically housed within sealed, re-enterable protective enclosures that frequently contain fiber optic components such as splice trays. In a typical application, a fiber optic cable is routed through a fiber optic enclosure and within the fiber optic enclosure one or more of the optical fibers is accessed for splicing to a drop cable. It is frequently desirable to aerially mount the fiber optic enclosures.

To distribute fiber optic cables to various locations aerial routing is commonly used. Hanger kits allow aerial installation of optical fiber enclosures for the aerial routing of the optical fiber cables due to various reasons such as a need to make splices on aerial cables, a possible lack of poles or facades for fixing the optical fiber enclosures, geographical requirements that hinders typical installation (poles, facades, and manholes).

Further, to provide splices in aerial telecommunication and CATV cables and splice enclosures mounted adjacent the cables to protect the splices. Typically, one or a bundle of aerial telecommunication cables are lashed to a messenger strand or cable that spans and is anchored to spaced apart supports such as telephone or utility poles.

Prior art reference "US9407080B2" teaches a hanger assembly for aerial mounting of a fiber closure. The hanger assembly has a base unit having top and side walls with pivotable arms to mount the fiber closure on a cable.

Another prior art reference "US9377132B2" discloses an aerial hanger unit for a fiber closure with pivotally connected arms and clamps.

Yet another prior art reference "KR200457959Y1" provides a hanger kit for a fiber closure aerial mounting that has a movable plate and a fixed plate joined together.

Yet another prior art reference "US9939602B2" discloses a hanger kit for a fiber closure aerial mounting with two J-shaped cradles.

Yet another prior art reference "US20130236141A1" discloses optical cable connection closure allowing for improved esthetic appeal.

While the prior arts provide various devices and systems that are known for hanging or securing a splice enclosure to a messenger strand, however such devices and systems tend to have multiple components that must be attached and aligned independently, and which may also present many loose parts that can be lost when in the air installing the device. Further, the above-mentioned solutions generally have a single compression point and can only be installed on cables having smaller diameters. Moreover, as the number of components in such solutions is on the higher side, therefore, the handling complexity and maintenance of such devices is higher.

Therefore, in the light of the above-stated discussion, there is a need to overcome the above stated disadvantages by providing enhanced configurations for aerially mounting fiber optic enclosures. Thus, the present disclosure provides an alternative apparatus for aerial mounting the optical fiber closures.

### SUMMARY OF THE DISCLOSURE

The invention is identified in the appended set of claims. Embodiments of the present disclosure provide a system and method to mount an optical fiber closure aerially over the cable.

According to the first aspect of the present disclosure, the hanger kit installed over a cable comprising a plurality of hangers. In particular, each hanger of the plurality of hangers includes a bracket having a vertical arm and a horizontal arm with a curved portion and a support arm having a first end and a second end. The first end is adapted to be engaged with the vertical arm such that the support arm is substantially parallel to the horizontal arm in an installed configuration of the hanger.

According to the second aspect of the present disclosure, the vertical arm comprises a plurality of slots arranged in a vertically stacked orientation and the support arm comprises a tab extending substantially outwardly from the first end such that, in the install configuration, the tab is inserted in at least one slot of the plurality of slots.

According to the third aspect of the present disclosure, the horizontal arm and the support arm comprise an arm fastener cavity and a support fastener cavity respectively.

In accordance with an embodiment of the present disclosure, the curved portion (126) is greater than 5 millimeters (mm).

In accordance with an embodiment of the present disclosure, not being part of the claimed invention, an angle between the vertical arm (122) and the horizontal arm (124) is in a range of 60 degrees to 120 degrees.

In accordance with an embodiment of the present disclosure, the bracket (110) comprising the vertical arm (122) and the horizontal arm (124) is a monolith structure.

According to the fourth aspect of the present disclosure, a method for installing an optical fiber closure by mounting hanger aerially over the cable comprising steps of holding a horizontal arm of a bracket of the hanger over a cable, adjusting a support arm of the hanger according to a diameter of the cable, inserting a tab provided at a first end of the support arm of the hanger in at least one slot of a plurality of slots provided in a vertical arm of the bracket and tightening a fastener to engage the horizontal arm and the support arm in an installed configuration of the hanger such that the cable is tightly held between the horizontal arm and the support arm.

According to the fifth aspect of the present disclosure, the method further includes tightening the fastener to engage the horizontal arm and the support arm such that the cable is held between a curved portion of the horizontal arm on one side and the support arm on the other side.

In accordance with an embodiment of the present disclosure, the method involves attaching an optical fiber closure to the vertical arm of the bracket by way of an adapter, an adapter fastener, and a nut, thereby enabling mounting of the optical fiber closure on the cable.

In accordance with an embodiment of the present disclosure, the method involves welding a nut for the fastener to at least one of, the horizontal arm and the support arm.

These and other aspects herein will be better appreciated and understood when considered in conjunction with the following description and the accompanying drawings. It should be understood, however, that the following descriptions are given by way of illustration and not of limitation.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1A is a pictorial snapshot illustrating a schematic view of an installation of a hanger kit installed over a cable in accordance with an embodiment of the present disclosure;
Fig. 1B is a pictorial snapshot illustrating a side view of the hanger in accordance with an embodiment of the present disclosure;
Fig. 1C is a pictorial snapshot illustrating another side view of the hanger in accordance with an embodiment of the present disclosure;
Fig. 1D is a pictorial snapshot illustrating yet another side view of the hanger in accordance with an embodiment of the present disclosure;
Fig. 1E is a pictorial snapshot illustrating a side perspective view of a bracket in accordance with an embodiment of the present disclosure;
Fig. 1F is a pictorial snapshot illustrating another side perspective view of the bracket in accordance with an embodiment of the present disclosure;
Fig. 1G is a pictorial snapshot illustrating a top perspective view of a support arm of the hanger in accordance with an embodiment of the present disclosure;
Fig. 1H is a pictorial snapshot illustrating a side perspective view of an adapter of the hanger in accordance with an embodiment of the present disclosure;
Fig. 2 is a flow chart illustrating a method for installing the hanger kit over the cable in accordance with an embodiment of the present disclosure.
Fig. 3 is a flowchart illustrating a method for installing the hanger kit over the cable by mounting the optical fiber closure aerially over the cable in accordance with an embodiment of the present disclosure.

The system and method are illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements is included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

The term "the hanger 108" as used hereinafter refers to both the first and second hangers 108a and 108b.

Term "the bracket 110" as used hereinafter refers to both the first and second brackets 110 and 114.

Term "the support arm 112" as used hereinafter refers to both the first and second support arms 112 and 116.

The structural and functional aspects of the first hanger 108a, the first bracket 110, and the first support arm 112 apply to the second hanger 108b, the second bracket 114, and the second support arm 116, respectively.

Term "distal end" used herein refers to an end of the horizontal arm that points away from the vertical arm.

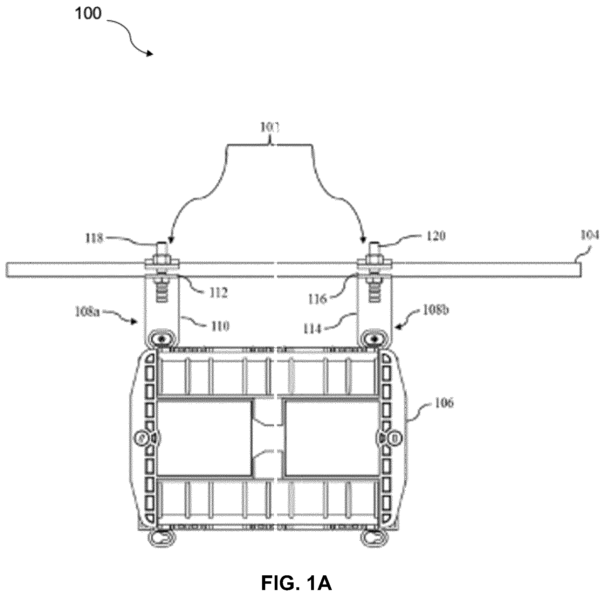

Fig. 1A is a pictorial snapshot illustrating a schematic view of an installation 100 of a hanger kit 102 installed over a cable 104 in accordance with an embodiment of the present disclosure. In particular, the hanger kit 102 facilitates mounting an optical fiber closure 106 aerially over the cable 104. The hanger kit 102 has one or more hangers of which first and second hangers 108a and 108b. It is noted that, the first hanger 108a and the second hanger 108b is structurally and functionally similar. The first hanger 108a have a first bracket 110 and a first support arm 112. And, the second hanger 108b have a second bracket 114 and a second support arm 116.

In some aspects of the present disclosure, the first and second brackets 110 and 114 and the first and second support arms 112 and 116 is made up of a sheet metal to eliminate the use of molds to fabricate the hanger kit 102.

Further, the first and second brackets 110 and 114 are mounted over the cable 104 by tightening the first and second support arms 112 and 116 by way of one or more fasteners. The first and second fasteners 118 and 120 of one or more fasteners are shown to fixedly engage the first and second brackets 110 and 114 on the cable 104 in an installed configuration of the hanger kit 102. Specifically, in the installed configuration of the hanger kit 102, the cable 104 is tightly held within the first and second brackets 110 and 114.

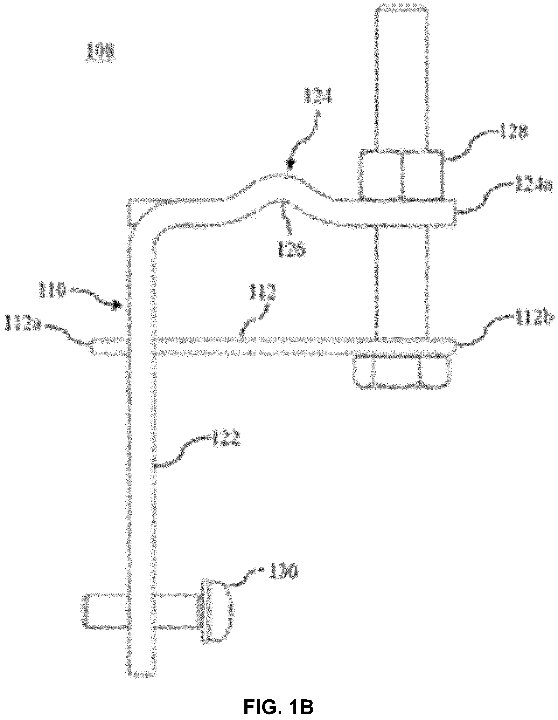

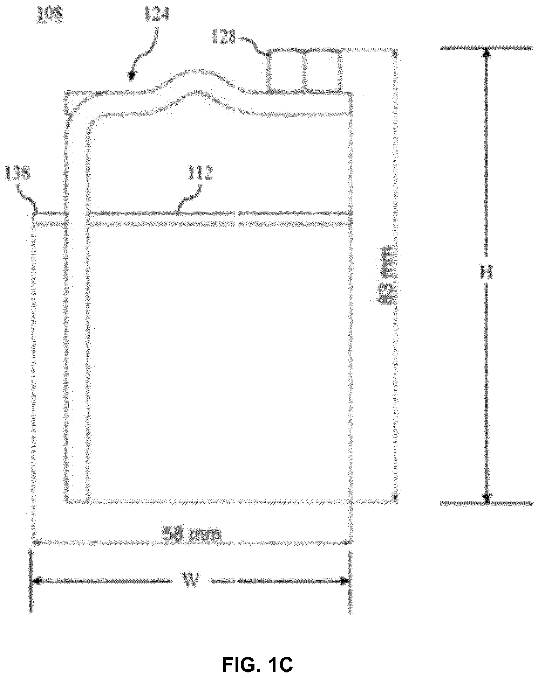

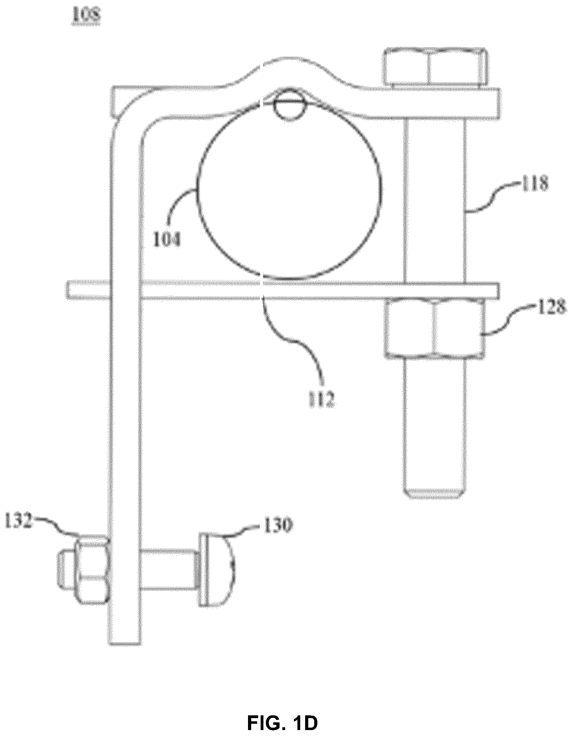

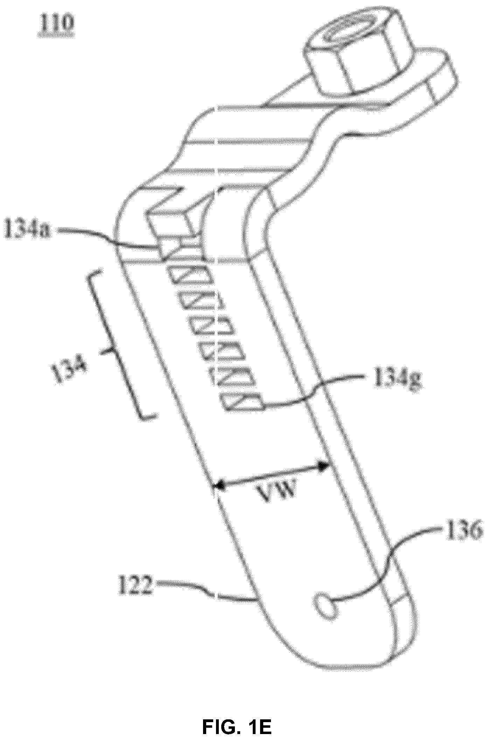

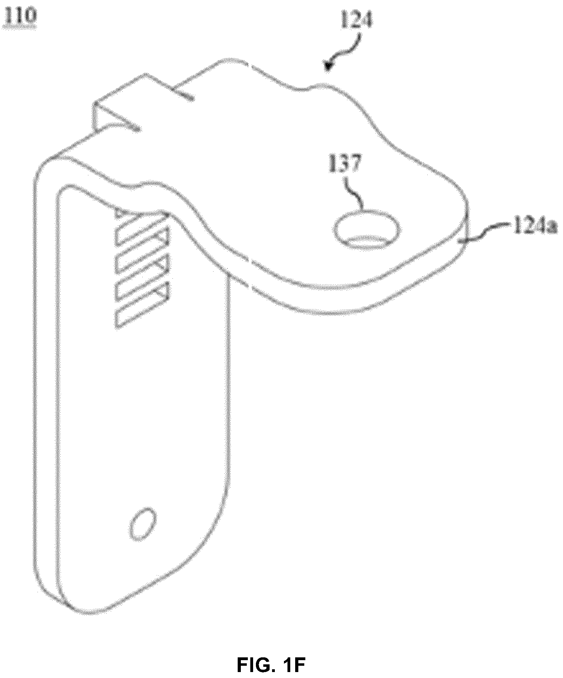

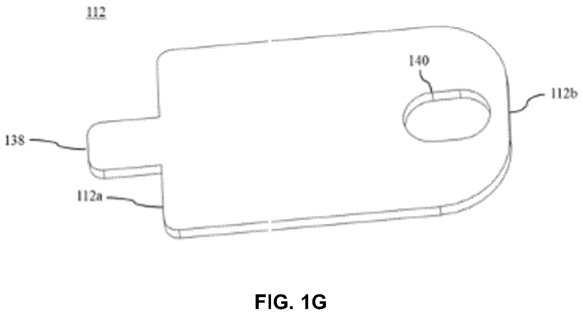

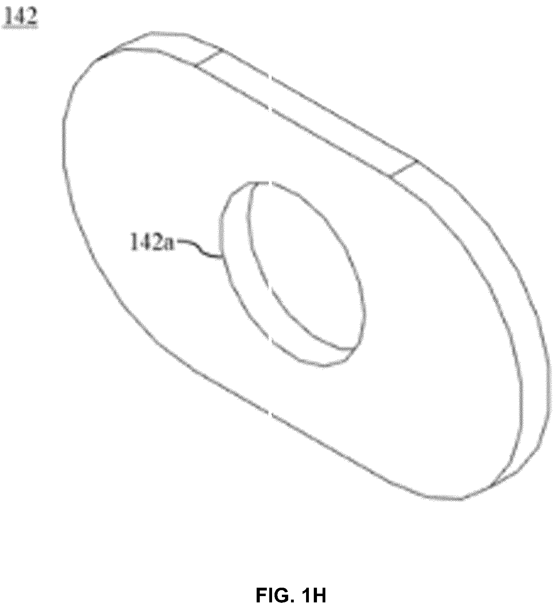

The optical fiber closure 106 is attached to first and second brackets 110 and 114, thereby enabling mounting of the optical fiber closure 106 on the cable 104. Although FIG. 1 illustrates that the hanger kit 102 has two brackets (*i.e.,* the first and second brackets 110 and 114) and corresponding two support arms (*i.e.,* the first and second support arms 112 and 116), it will be apparent to a person skilled in the art that the scope of the present disclosure is not limited to it.

In various other aspects of the present disclosure, the hanger kit 102 have more than two brackets and support arms in a way that each bracket has a corresponding support arm, without deviating from the scope of the present disclosure. In such a scenario, each bracket and each support arm is adapted to be used in a manner similar to the first and second brackets 110 and 114 and the first and second support arms 112 and 116.

Fig. 1B is a pictorial snapshot illustrating a side view of the first hanger 108a (hereinafter interchangeably referred to and designated as "the hanger 108"). In particular, the first hanger 108 has the first bracket 110 (hereinafter interchangeably referred to and designated as "the bracket 110) and the first support arm 112 (hereinafter interchangeably referred to and designated as "the support arm 112).

In particular, the bracket 110 have a vertical arm 122 and a horizontal arm 124. In some aspects of the present disclosure, not being part of the claimed invention, the vertical arm 122 is disposed at an angle with respect to the horizontal arm 124. In one embodiment, the angle between the vertical arm 122 and the horizontal arm 124 is in a range of 60 degrees to 120 degrees. Alternatively, the angle between the vertical arm 122 and the horizontal arm 124 is 90 degrees.

The horizontal arm 124 have a curved portion 126 forming a bump on an upper surface of the horizontal arm 124. In particular, the curved portion 126 is provided to accept cables (*e.g.,* the cable 104) with smaller diameters when the hanger 108 is installed over the cables.

In some aspects of the present disclosure, the curved portion 126 is greater than 5 millimeters (mm). The curved portion 126 being greater than 5 mm allow the hanger 108 to accept a cable (*e.g.,* the cable 104) having a diameter in a range of 3 mm to 32 mm. Moreover, the curved portion 126 being greater than 5 mm allow the hanger 108 to accept a cable (*e.g.,* the cable 104) having a diameter of approximately 28 mm.

In some aspects of the present disclosure, the horizontal arm 124 have a distal end 124a with an arm fastener cavity 137. The distal end 124a is an end of the horizontal arm 124 that points away from the vertical arms 122.

In some aspects of the present disclosure, the vertical arm 122 and the horizontal arm 124 form a monolith structure.

Alternatively, the bracket 108 having the vertical arm 122 and the horizontal arm 124 is fabricated by shaping a single sheet metal that is made up of a material such as, but not limited to, iron, aluminium, and the like. Aspects of the present disclosure are intended to have and/or otherwise cover any type of the material for the bracket 108 that eliminates the requirement for molds, without deviating from the scope of the present disclosure.

The support arm 112 includes a first end 112a with a tab 138 and a second end 112b. In particular, the first end 112a is engaged with the vertical arm 122 by way of the tab 138 in an installed configuration of the hanger 108. Moreover, when the support arm 112 is engaged with the vertical arm 122 by way of the tab 138 provided at the first end 112a, the support arm 112 is substantially parallel to the horizontal arm 124 in the installed configuration of the hanger 108.

In some aspects of the present disclosure, the support arm 112 has a flat surface such that in the installed configuration of the hanger 108, an upper surface of the support arm 112 is substantially parallel to a bottom surface (*i.e.,* a flat bottom surface) of the horizontal arm 124. Alternatively, the support arm 112 have a curved portion (not shown) that is substantially similar to the curved portion 126 and curved in an opposite direction with respect to the curved portion 126. The curved portion of the support arm 112 facilitate a fit of the cable 104 within the bracket 110 in the installed configuration of the hanger 108.

In accordance with an embodiment of the present disclosure, the second end 112b of the support arm 112 may have a support fastener cavity 140. Particularly, the support fastener cavity 140 of the support arm 112 align with the arm fastener cavity 137 of the horizontal arm 124 such that, in the installed configuration of the hanger 108, the support arm 112 is attached to the horizontal arm 124 by way of the fastener 118. Moreover, the fastener 118 is inserted through the support fastener cavity 140 of the support arm 112 and the arm fastener cavity 137 of the horizontal arm 124 and tightened by way of a nut 128.

In accordance with an embodiment of the present disclosure, the vertical arm 122 have an adapter cavity 136 adapted to accept an adapter fastener 130 that is tightened by way of a nut 132. In particular, the nut 132 have inner threads and the adapter fastener 130 have outer threads such that the inner threads of the nut 132 are engaged with the outer threads of the adapter fastener 130 when the adapter fastener 130 is inserted into the adapter cavity 136 and screwed in the nut 132.

In accordance with another embodiment of the present disclosure, the hanger 108 have an adapter 142 having a through hole 142a such that the through hole 142a of the adapter 142 is aligned with the adapter cavity 136 and the adapter fastener 130 is inserted through the through hole 142a of the adapter 142 and the adapter cavity 136 to be fastened with the nut 132.

In accordance with an embodiment of the present disclosure, the optical fiber closure 106 is attached to the vertical arm 122 of the bracket 110. Specifically, the adapter fastener 130 is adapted to tighten the optical fiber closure 106 with the vertical arm 122 of the bracket 110 of the hanger 108.

In accordance with an embodiment of the present disclosure, the nut 128 is fixedly attached to a top surface of the horizontal arm 124. In particular, the nut 128 is fixedly attached over the arm fastener cavity 137 of the horizontal arm 124 such that an opening of the nut 128 is aligned with the arm fastener cavity 137 of the horizontal arm 124.

Fig. 1C illustrates a side view of hanger 108 in accordance with another embodiment of the present disclosure. In particular, the nut 128 is fixedly attached to a top surface of the horizontal arm 124. Moreover, the nut 128 is fixedly attached over the arm fastener cavity 137 of the horizontal arm 124 such that an opening of the nut 128 is aligned with the arm fastener cavity 137 of the horizontal arm 124. The fastener 118 is inserted through the support fastener cavity 140 of the support arm 112 and into the arm fastener cavity 137 of the horizontal arm 124 is tightened by way of the nut 128. In some aspects of the present disclosure, the nut 128 is fixedly attached to the top surface of the horizontal arm 124 by way of welding. Alternatively, the nut 128 have inner threads (not shown) that facilitate the tightening of the fastener 118.

In accordance with an embodiment of the present disclosure, the total height H of the hanger 108 having the fixedly attached nut 128 on the top surface of the horizontal arm 124 is 83 mm. And, a total width W of the hanger 108 having the support arm 112 installed on the bracket 110 (*i.e.,* having the tab 138) is 56 mm.

Fig. 1D **is a pictorial snapshot** illustrating yet another side view of the hanger 108 in accordance with an embodiment of the present disclosure. The nut 128 is fixedly attached to a bottom surface of the support arm 112 by support fastener cavity 140 of the support arm 112 such that the opening of the nut 128 is aligned with the support fastener cavity 140 of the support arm 112. Thus, the fastener 118 inserted through the arm fastener cavity 137 of the horizontal arm 124 and into the support fastener cavity 140 of the support arm 112 is screwed by way of the nut 128.

In an aspect of the present disclosure, the nut 128 is fixedly attached to the bottom surface of the support arm 112 by way of welding. In particular, the nut 128 tightens the fastener 118 such that the horizontal arm 124 and the support arm 112 tightens on both sides of the cable 104 making the installation ergonomic and safe. Moreover, the adapter cavity 136 is adapted to accept the adapter fastener 130 that is tightened by way of the nut 132. As discussed, the nut 132 have inner threads and the adapter fastener 130 have outer threads such that the inner threads of the nut 132 are engaged with the outer threads of the adapter fastener 130 when the adapter fastener 130 is inserted into the adapter cavity 136 and screwed in the nut 132.

Fig. 1E is a pictorial snapshot illustrating a side perspective view of the bracket 110 in accordance with an embodiment of the present disclosure. In particular, the vertical arm 122 has a plurality of slots 134 of which first through seventh slots 134a-134g are shown. The first through seventh slots 134a-134g is arranged in a vertically stacked orientation. In particular, each slot of the first through seventh slots 134a-134g is arranged in a way that each slot of the first through seventh slots 134a-134 g corresponds to a specific diameter. Further, in the installed configuration of the hanger 108, at least one slot of the first through seventh slots 134a-134g accept the tab 138 of the support arm 112 to make the installation ergonomic and safer.

In some aspects of the present disclosure, each slot of the first through seventh slots 134a-134g have a dimension (*i.e.,* a width and a height) that closely imitates a dimension (*i.e.,* a width and a thickness) of the tab 138 of the support arm 112 such that by virtue of the dimensions of each slot of the first through seventh slots 134a-134g, the tab 138 of the support arm 112 can be inserted in a secure manner inside at least one slot of the of the first through seventh slots 134a-134g in the installed configuration of the hanger 108. Further, the vertical arm 122 have the adapter cavity 136. The adapter cavity 136 is adapted to accept the adapter fastener 130 that is tightened by way of the nut 132

In one aspect of the present disclosure, the vertical arm 122 may have a width VW that is equal to 30 mm. Alternatively, the width VW may differ.

Fig. 1F is a pictorial snapshot illustrating another side perspective view of the bracket 110 in accordance with an embodiment of the present disclosure. The distal end 124a of the horizontal arm 124 have the arm fastener cavity 137 aligned with the support fastener cavity 140 of the support arm 112 such that, in the installed configuration of the hanger 108, the support arm 112 is attached to the horizontal arm 124 by way of the fastener 118. In other words, the fastener 118 is inserted through the support fastener cavity 140 of the support arm 112 and into the arm fastener cavity 137 of the horizontal arm 124 and tightened by way of the nut 128.

Fig. 1G is a pictorial snapshot illustrating a top perspective view of the support arm 112 of the hanger 108 in accordance with an embodiment of the present disclosure. The support arm 112 have the first end 112a with the tab 138 extending substantially outwardly from the first end 112a such that the tab 138 is inserted in at least one slot of the first through seventh slots 134a-134g of the vertical arm 122 in the installed configuration of the hanger 108. In the installed configuration of the hanger 108, the support arm 112 is engaged with the vertical arm 122 by way of the tab 138 such that the support arm 112 is substantially parallel to the horizontal arm 124. Further, the support arm 112 may have the support fastener cavity 140 aligned with the arm fastener cavity 137 of the horizontal arm 124 such that, in the installed configuration of the hanger 108, the support arm 112 is attached to the horizontal arm 124 by way of the fastener 118. Specifically, the fastener 118 is inserted through the support fastener cavity 140 and the arm fastener cavity 137 of the horizontal arm 124 and tightened by way of the nut 128.

In some aspects of the present disclosure, the support arm 112 may have a substantially rectangular shape with substantially curved edges. Alternatively, the support arm 112 may have a different shape.

Fig. 1H is a pictorial snapshot illustrating a side perspective view of the adapter 142 of the hanger 108 in accordance with an embodiment of the present disclosure. The adapter 142 is an oval shaped thin plate having a through hole 142a that is adapted to distribute a load of the threaded adapter fastener 130. In particular, the through hole 142a is provided at a center of the adapter 142 such that the through hole 142a is aligned with the adapter cavity 136 and the adapter fastener 130 is inserted through the through hole 142a and the adapter cavity 136 to be fastened with the nut 132.

In accordance with an embodiment of the present disclosure, the adapter fastener 130 is adapted to tighten the optical fiber closure 106 with the hanger 108. In particular, the adapter 142 is made up of a material such as, but not limited to, a metal, a hardened plastic, and the like. Aspects of the present disclosure are intended to have and/or otherwise cover any type of the material for the adapter 142, without deviating from the scope of the present disclosure.

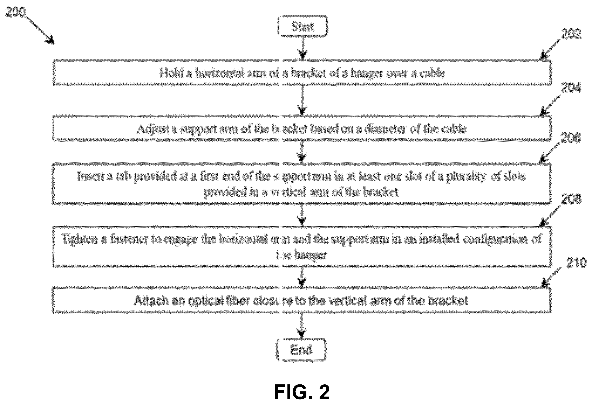

Fig. 2 is a flowchart illustrating a method 200 for installing the hanger kit 102 over the cable 104 by mounting the optical fiber closure (106) aerially over the cable (104) in accordance with an embodiment of the present disclosure. The method 200 starts at step 202 and proceeds to step 204-210.

At step 202, the horizontal arm 124 of the bracket 110 is held over the cable 104.

At step 204, the support arm 112 is adjusted based on the diameter of the cable 104.

At step 206, the tab 138 provided at the first end 112a of the support arm 112 is inserted in at least one slot of the plurality of slots 134a-134g provided in the vertical arm 122 of the bracket 110.

At step 208, the fastener 118 is tightened to engage the horizontal arm 124 and the support arm 112 in the installed configuration of the hanger 108 such that the cable 104 is tightly held between the horizontal arm 124 of the bracket 110 on one side and the support arm 112 on the other side.

In particular, the cable 104 is held between the curved portion 126 of the horizontal arm 124 of the bracket 110 on one side and the support arm 112 on the other side.

At step 210, the optical fiber closure 106 is attached to the vertical arm 122 of the bracket 110 by anyone of the adapter 142, the adapter fastener 130, and the nut 132, thereby enabling mounting of the optical fiber closure 106 on the cable 104.

In some aspects of the present disclosure, the step 210 is performed prior to the step 202 such that, prior to holding the horizontal arm 124 of the bracket 110 over the cable 104, the optical fiber closure 106 is attached to the vertical arm 122 of the bracket 110 to facilitate easy mounting of the optical fiber closure 106 on the cable 104.

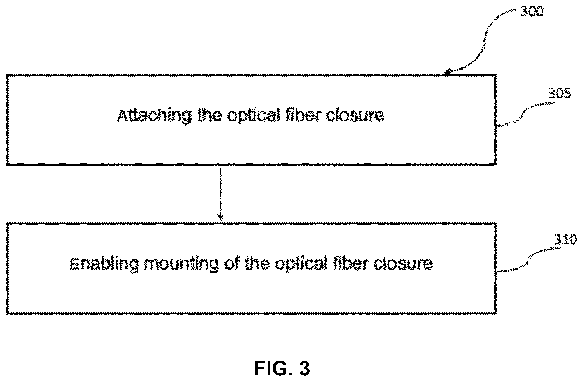

Fig. 3 is a flowchart illustrating a method for installing the hanger kit over the cable 104 by mounting the optical fiber closure aerially over the cable in accordance with an embodiment of the present disclosure.

At step 305, an optical fiber closure 106 is attached to the vertical arm 122 of the bracket 110 by an attachment. The attachment is any of an adapter 142, an adapter fastener 130, and a nut 132.
At step 310 the optical fiber closure (106) are mounted on the cable (104).

Advantageously, the hanger kit 102 facilitates the mounting of optical fiber closure 106 on any cable having any diameter. Moreover, the hangers 108 of the hanger kit 102 tighten and compress the cable 104 on two points thus creating more friction and completely preventing the hangers 108 from rotating around the cable 104.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated.

## Claims

1. A hanger (108) to mount an optical fiber closure (106) aerially over the cable (104) comprising:
a bracket (110) with
a vertical arm (122);
a horizontal arm (124) with a curved portion (126); and
a support arm (112) having
a first end (112a) and a second end (112b),
wherein the first end (112a) is adapted to be engaged with the vertical arm (122) such that the support arm (112) is substantially parallel to the horizontal arm (124) in an installed configuration of the hanger (108); and wherein the cable (104) is held between the curved portion (126) of the horizontal arm (124) on one side and the support arm (112) on other side, **characterized in that** the vertical arm (122) has a plurality of slots (134) arranged in a vertically stacked orientation and the support arm (112) has a tab (138) extending substantially outwardly from the first end (112a) operably configured to be inserted in at least one slot of the plurality of slots (134).

2. The hanger (108) as claimed in claim 1, wherein the horizontal arm (124) and the support arm (112) comprises an arm fastener cavity (137) and a support fastener cavity (140).

3. The hanger (108) as claimed in claim 1, wherein the curved portion (126) is greater than 5 millimeters

4. The hanger (108) as claimed in claim 1, wherein the bracket (110) comprising the vertical arm (122) and the horizontal arm (124) is a monolith structure.

5. A hanger kit (102) installed over a cable (104) to mount an optical fiber closure (106) aerially over the cable (104), wherein the hanger kit (102) comprising:
a plurality of hangers (108), as claimed in any of the preceding claims.

6. A method (200) for installing a hanger (108) as claimed in claim 1 over a cable (104) to mount an optical fiber closure (106) aerially over the cable (104), **characterized in that** steps of:
holding a horizontal arm (124) of a bracket (110) of the hanger (108) over a cable (104);
adjusting a support arm (112) of the hanger (108) according to a diameter of the cable (104);
inserting a tab (138) provided at a first end (112a) of the support arm (112) of the hanger (108) in at least one slot of a plurality of slots (134) provided in a vertical arm (122) of the bracket (110); and
tightening a fastener (118) to engage the horizontal arm (124) and the support arm (112) in an installed configuration of the hanger (108) such that the cable (104) is tightly held between the horizontal arm (124) and the support arm (112);
wherein the first end (112a) is adapted to be engaged with the vertical arm (122) such that the support arm (112) is substantially parallel to the horizontal arm (124) in an installed configuration of the hanger (108).

7. The method (200) as claimed in claim 6, wherein the method (200) comprises a step of tightening the fastener (118) to engage the horizontal arm (124) and the support arm (112).

8. The method (200) as claimed in claim 6, wherein the cable (104) is held between a curved portion (126) of the horizontal arm (124) on one side and the support arm (112) on other side.

9. The method (200) as claimed in claim 6, wherein the method further comprising
attaching an optical fiber closure (106) to the vertical arm (122) of the bracket (110) by an attachment; and
enabling mounting of the optical fiber closure (106) on the cable (104)
wherein the attachment is any of an adapter (142), an adapter fastener (130), and a nut (132).

10. The method (200) as claimed in claim 8, the method comprises welding a nut (128) for the fastener (118) to at least one of, the horizontal arm (124) and the support arm (112).

## Patentansprüche

1. Aufhänger (108) zum Montieren einer Lichtleitfaserumhüllung (106) in der Luft über dem Kabel (104) umfassend:
einen Bügel (110) mit
einem vertikalen Arm (122);
einem horizontalen Arm (124) mit einem gekrümmten Abschnitt (126); und einen Stützarm (112) aufweisend
ein erstes Ende (112a) und ein zweites Ende (112b),
worin das erste Ende (112a) dazu geeignet ist, mit dem vertikalen Arm (122) derart in Eingriff gebracht zu werden, dass der Stützarm (112) zum horizontalen Arm (124) in einer installierten Gestaltung des Aufhängers (108) im Wesentlichen parallel ist; und worin das Kabel (104) zwischen dem gekrümmten Abschnitt (126) des horizontalen Armes (124) an einer Seite und dem Stützarm (112) an der anderen Seite gehalten wird, **dadurch gekennzeichnet, dass** der vertikale Arm (122) eine Vielzahl von Schlitzen (134) hat, die in einer vertikal gestapelten Orientierung angeordnet sind und der Stützarm (112) eine Lasche (138) hat, die sich im Wesentlichen nach außen aus dem ersten Ende (112a) erstreckt, die wirkungsmäßig dafür ausgelegt ist, in zumindest einen Schlitz von der Vielzahl von Schlitzen (134) eingefügt zu werden.

2. Aufhänger (108) nach Anspruch 1, worin der horizontale Arm (124) und der Stützarm (112) einen Armbefestigungshohlraum (137) und einen Abstützungsbefestigerhohlraum (140) umfassen.

3. Aufhänger (108) nach Anspruch 1, worin der gekrümmte Abschnitt (126) größer als 5 Millimeter ist.

4. Aufhänger (108) nach Anspruch 1, worin der Bügel (110) den vertikalen Arm (122) umfasst und der horizontale Arm (124) eine monolithische Struktur ist.

5. Aufhängerkit (102), das über einem Kabel (104) installiert ist, um eine Lichtleitfaserumhüllung (106) in der Luft über dem Kabel (104) zu montieren, worin das Aufhängerkit (102) umfasst:
eine Vielzahl von Aufhängern (108) nach einem der vorhergehenden Ansprüche.

6. Verfahren (200) zum Installieren eines Aufhängers (108) nach Anspruch 1 über einem Kabel (104), um eine Lichtleitfaserumhüllung (106) in der Luft über dem Kabel (104) zu montieren, **gekennzeichnet durch** die Schritte:
Halten eines horizontalen Armes (124) eines Bügels (110) des Aufhängers (108) über einem Kabel (104);
Einstellen eines Stützarmes (112) des Aufhängers (108) gemäß einem Durchmesser des Kabels (104);
Einfügen einer Lasche (138), die an einem ersten Ende (112a) des Stützarmes (112) des Aufhängers (108) vorgesehen ist, in zumindest einen Schlitz von einer Vielzahl von Schlitzen (134), die in einem vertikalen Arm (122) des Bügels (110) vorgesehen sind; und
Festziehen eines Befestigers (118), um den horizontalen Arm (124) und den Stützarm (112) in einer installierten Gestaltung des Aufhängers (108) derart einzugreifen, dass das Kabel (104) zwischen dem horizontalen Arm (124) und dem Stützarm (112) fest gehalten wird;
worin das erste Ende (112a) dazu geeignet ist, mit dem vertikalen Arm (122) derart in Eingriff gebracht zu werden, dass der Stützarm (112) zum horizontalen Arm (124) in einer installierten Gestaltung des Aufhängers (108) im Wesentlichen parallel ist.

7. Verfahren (200) nach Anspruch 6, worin das Verfahren (200) einen Schritt des Festziehens des Befestigers (118) umfasst, um den horizontalen Arm (124) und den Stützarm (112) einzugreifen.

8. Verfahren (200) nach Anspruch 6, worin das Kabel (104) zwischen einem gekrümmten Abschnitt (126) des horizontalen Armes (124) an einer Seite und dem Stützarm (112) an der anderen Seite gehalten wird.

9. Verfahren (200) nach Anspruch 6, worin das Verfahren ferner umfasst
Anbringen einer Lichtleitfaserumhüllung (106) an den vertikalen Arm (122) des Bügels (110) durch einen Befestigungsteil; und
Ermöglichen des Montierens der Lichtleitfaserumhüllung (106) an dem Kabel (104),
worin der Befestigungsteil irgendeiner bzw. irgendeine von einem Adapter (142), einem Adapter-Befestiger (130) und einer Mutter (132) ist.

10. Verfahren (200) nach Anspruch 8, wobei das Verfahren Schweißen einer Mutter (128) für den Befestiger (118) an zumindest einem von dem horizontalen Arm (124) und dem Stützarm (112) umfasst.

## Revendications

1. Dispositif de suspension (108) pour monter un boîtier de fibres optiques (106) de manière aérienne sur le câble (104), comprenant :
un support (110) avec
un bras vertical (122) ;
un bras horizontal (124) avec une partie incurvée (126) ; et
un bras support (112) présentant
une première extrémité (112a) et une seconde extrémité (112b),
dans lequel la première extrémité (112a) est conçue pour venir en prise avec le bras vertical (122) de sorte que le bras support (112) soit sensiblement parallèle au bras horizontal (124) dans une configuration installée du dispositif de suspension (108) ; et dans lequel le câble (104) est maintenu entre la partie incurvée (126) du bras horizontal (124) d'un côté et le bras support (112) de l'autre côté, **caractérisé en ce que** le bras vertical (122) présente une pluralité de fentes (134) agencées dans une orientation empilée verticalement et le bras support (112) présente une patte (138) s'étendant sensiblement vers l'extérieur à partir de la première extrémité (112a), configurée fonctionnellement pour être insérée dans au moins une fente de la pluralité de fentes (134).

2. Dispositif de suspension (108) selon la revendication 1, dans lequel le bras horizontal (124) et le bras support (112) comprennent une cavité (137) de fixation de bras et une cavité (140) de fixation de support.

3. Dispositif de suspension (108) selon la revendication 1, dans lequel la partie incurvée (126) mesure plus de 5 millimètres.

4. Dispositif de suspension (108) selon la revendication 1, dans lequel le support (110) comprenant le bras vertical (122) et le bras horizontal (124) est une structure monolithique.

5. Kit de suspension (102) installé sur un câble (104) pour monter un boîtier de fibres optiques (106) de manière aérienne sur le câble (104), dans lequel le kit de suspension (102) comprend :
une pluralité de dispositifs de suspension (108) selon l'une quelconque des revendications précédentes.

6. Procédé (200) d'installation d'un dispositif de suspension (108) selon la revendication 1 sur un câble (104) pour monter un boîtier de fibres optiques (106) de manière aérienne sur le câble (104), **caractérisé par** les étapes suivantes :
le maintien d'un bras horizontal (124) d'un support (110) du dispositif de suspension (108) sur un câble (104) ;
le réglage d'un bras support (112) du dispositif de suspension (108) en fonction d'un diamètre du câble (104) ;
l'insertion d'une patte (138) disposée sur une première extrémité (112a) du bras support (112) du dispositif de suspension (108) dans au moins une fente d'une pluralité de fentes (134) disposées dans un bras vertical (122) du support (110) ; et
le serrage d'une fixation (118) pour mettre en prise le bras horizontal (124) et le bras support (112) dans une configuration installée du dispositif de suspension (108) de sorte que le câble (104) soit fermement maintenu entre le bras horizontal (124) et le bras support (112) ;
dans lequel la première extrémité (112a) est conçue pour venir en prise avec le bras vertical (122) de sorte que le bras support (112) soit sensiblement parallèle au bras horizontal (124) dans une configuration installée du dispositif de suspension (108).

7. Procédé (200) selon la revendication 6, dans lequel le procédé (200) comprend une étape de serrage de la fixation (118) pour mettre en prise le bras horizontal (124) et le bras support (112).

8. Procédé (200) selon la revendication 6, dans lequel le câble (104) est maintenu entre une partie incurvée (126) du bras horizontal (124) d'un côté et le bras support (112) de l'autre côté.

9. Procédé (200) selon la revendication 6, dans lequel le procédé comprend en outre
la fixation d'un boîtier de fibres optiques (106) au bras vertical (122) du support (110) par un élément d'assemblage ; et
le fait de permettre le montage du boîtier de fibres optiques (106) sur le câble (104)
dans lequel l'élément d'assemblage est l'un quelconque parmi un adaptateur (142), une fixation (130) d'adaptateur ou un écrou (132).

10. Procédé (200) selon la revendication 8, le procédé comprenant le soudage d'un écrou (128) destiné à la fixation (118) sur au moins l'un du bras horizontal (124) et du bras support (112).
